(19) **Europäisches Patentamt / European Patent Office / Office européen des brevets**

(11) **EP 4 475 141 A1**

(12) **EUROPEAN PATENT APPLICATION**
published in accordance with Art. 153(4) EPC

(43) Date of publication:
**11.12.2024 Bulletin 2024/50**

(21) Application number: **23749742.5**

(22) Date of filing: **31.01.2023**

(51) International Patent Classification (IPC):
**H01B 1/08** (2006.01)  **H01B 1/06** (2006.01)
**H01G 11/54** (2013.01)  **H01G 11/56** (2013.01)
**H01G 11/60** (2013.01)  **H01G 11/62** (2013.01)
**H01M 10/056** (2010.01)

(52) Cooperative Patent Classification (CPC):
**H01B 1/06; H01B 1/08; H01G 11/54; H01G 11/56;
H01G 11/60; H01G 11/62; H01M 10/056;
Y02E 60/10**

(86) International application number:
**PCT/JP2023/003062**

(87) International publication number:
**WO 2023/149426 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.02.2022  JP 2022014728**

(71) Applicant: **Niterra Co., Ltd.
Nagoya-shi, Aichi 461-0005 (JP)**

(72) Inventors:
• **KONDO Junpei
  Nagoya-shi, Aichi 461-0005 (JP)**
• **KATAOKA Kazuki
  Nagoya-shi, Aichi 461-0005 (JP)**
• **MIYAMOTO Suguru
  Nagoya-shi, Aichi 461-0005 (JP)**
• **HIKOSAKA Hideaki
  Nagoya-shi, Aichi 461-0005 (JP)**

(74) Representative: **Grünecker Patent- und
Rechtsanwälte
PartG mbB
Leopoldstraße 4
80802 München (DE)**

(54) **LITHIUM ION CONDUCTOR, SHEET AND POWER STORAGE DEVICE**

(57)    There are provided a lithium ion conductor, a sheet, and a power storage device with which the transference number for Li ions can be increased. The lithium ion conductor contains a solid electrolyte containing Li, La, Zr, and O and having a garnet-type or garnet-like crystal structure and an electrolyte solution in which a lithium salt is dissolved in at least one organic solvent. The organic solvent includes sulfolane or a sulfolane derivative, and, in the electrolyte solution, the molality of the lithium salt is 1.4 mol/kg or more. The percentage of the volume of the solid electrolyte to the total of the volume of the solid electrolyte and the volume of the electrolyte solution is 52% or more and less than 100%. The sheet and the power storage device contain the lithium ion conductor.

Fig. 1

EP 4 475 141 A1

**Description**

Technical Field

The present invention relates to a lithium ion conductor containing a solid electrolyte, a sheet, and a power storage device.

Background Art

A prior-art technology relating to a lithium ion conductor that contains a solid electrolyte containing Li, La, Zr, and O and having a garnet-type crystal structure and an electrolyte solution in which a lithium salt is dissolved in an organic solvent is disclosed in PTL 1. Oxide solid electrolytes having a garnet-type crystal structure are superior in electrochemical stability, but have the problem of high interfacial resistance. The prior-art technology reduces the interfacial resistance of the solid electrolyte with the electrolyte solution interposed between a solid electrolyte and a solid electrolyte.

Citation List

Patent Literature

PTL 1: Japanese Unexamined Patent Application Publication No. 2018-45965

Summary of Invention

Technical Problem

The electrolyte solution contains anions resulting from the dissociation of the lithium salt and solvent molecules besides Li ions. The prior-art technology has the problem of a small transference number for Li ions because the anions and solvent molecules also diffuse within the electrolyte solution.
The present invention was made to solve this problem, and an object of it is to provide a lithium ion conductor, a sheet, and a power storage device with which the transference number for Li ions can be increased.

Solution to Problem

To attain this object, a first aspect of the present invention is a lithium ion conductor containing a solid electrolyte containing Li, La, Zr, and O and having a garnet-type or garnet-like crystal structure and an electrolyte solution in which a lithium salt is dissolved in at least one organic solvent, wherein the organic solvent includes sulfolane or a sulfolane derivative, and, in the electrolyte solution, a molality of the lithium salt is 1.4 mol/kg or more. A percentage of a volume of the solid electrolyte to a total of the volume of the solid electrolyte and a volume of the electrolyte solution is 52% or more and less than 100%.
A second aspect is: In the first aspect, the electrolyte solution contains F, the lithium ion conductor includes a coating chemically bound to a surface of the solid electrolyte, and elements constituting the coating include S and F, with a relative concentration ratio of F to S being 2.9 or greater.
A third aspect is: In the first or second aspect, the lithium salt is lithium bis(fluorosulfonyl)imide.
A fourth aspect is: In any of the first to third aspects, the molality of the electrolyte solution is 1.6 mol/kg or more, and the percentage of a volume of the solid electrolyte to a total of the volume of the solid electrolyte and a volume of the electrolyte solution is 61% or more and less than 100%.
A fifth aspect is: In any of the first to fourth aspects, the solid electrolyte further contains Mg and Sr.
A sixth aspect is a sheet, the sheet including a binder and the lithium ion conductor in the first or second aspect.
A seventh aspect is a power storage device including a positive electrode layer, a negative electrode layer, and a separator that separates the positive electrode layer and the negative electrode layer, wherein the power storage device contains the lithium ion conductor in any of the first to fifth aspects.
An eighth aspect is: In the seventh aspect, at least one of the positive electrode layer, the negative electrode layer, or the separator contains the lithium ion conductor.
A ninth aspect is: In the seventh or eighth aspect, at least one of the positive electrode layer or the negative electrode layer includes a current-collecting layer, the power storage device includes at least one protective layer that is in contact with at least one of the separator or the current-collecting layer, and the protective layer contains the lithium ion conductor.

Advantageous Effects of Invention

With the lithium ion conductor, sheet, and power storage device according to the present invention, the transference number for Li ions can be increased.

Brief Description of Drawings

[Fig. 1] Fig. 1 is a cross-sectional view of a power storage device containing a lithium ion conductor in a first embodiment.
[Fig. 2] Fig. 2 is a diagram schematically illustrating a garnet-type crystal structure.
[Fig. 3] Fig. 3 is a cross-sectional view of a solid electrolyte.
[Fig. 4] Fig. 4 is a cross-sectional view of a power storage device in a second embodiment.
[Fig. 5] Fig. 5 is a cross-sectional view of a power storage device in a third embodiment.
[Fig. 6] Fig. 6 is a diagram illustrating the relationship between the percentage of the solid electrolyte or alumina in lithium ion conductors and the transference number for Li ions.

Description of Embodiments

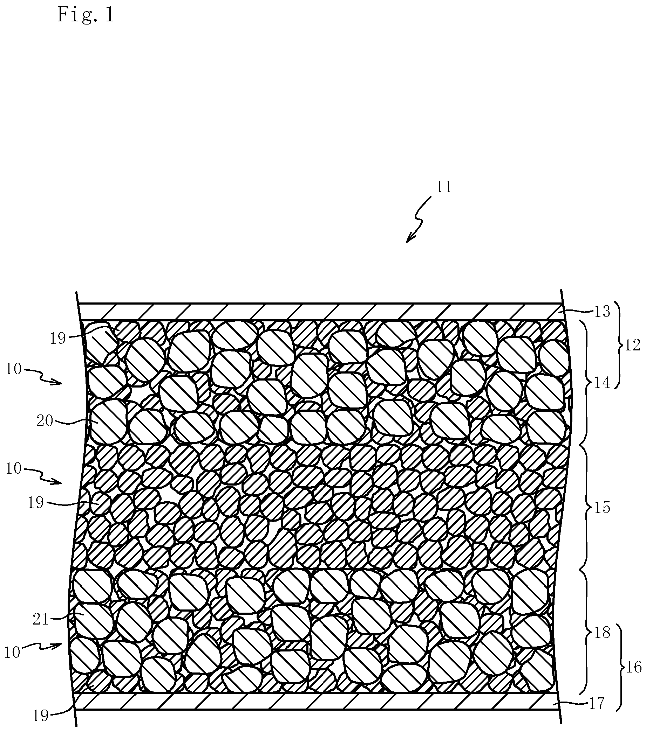

Preferred embodiments of the present invention will now be described with reference to the attached drawings. Fig. 1 is a schematic sectional view of a power storage device 11 containing a lithium ion conductor 10 in a first embodiment. The power storage device 11 in this embodiment is a lithium ion solid-state battery (secondary battery), whose power-generating element is composed of solids. A power-generating element being composed of solids means that the framework of the power-generating element is composed of solids, and includes a form in which the inside of the framework is impregnated with a liquid.

The power storage device 11 includes a positive electrode layer 12, an electrolyte layer 15, and a negative electrode layer 16 in sequence. The positive electrode layer 12, electrolyte layer 15, and negative electrode layer 16 are housed in a case (not illustrated).

The positive electrode layer 12 is a stack of a current-collecting layer 13 and a composite layer 14. The current-collecting layer 13 is a component having electric conductivity. Examples of materials for the current-collecting layer 13 include a metal selected from Ni, Ti, Fe, and Al, an alloy containing two or more of these elements, stainless steel, and a carbon material.

The composite layer 14 contains a lithium ion conductor 10 and an active material 20. The lithium ion conductor 10 contains a solid electrolyte 19. To reduce the resistance of the composite layer 14, a conductive additive may be contained in the composite layer 14. Examples of conductive additives include carbon black, acetylene black, Ketjenblack, carbon fiber, Ni, Pt, and Ag.

Examples of active materials 20 include a metal oxide having at least one transition metal, a sulfur active material, and an organic active material. An example of a metal oxide having at least one transition metal is a metal oxide containing Li and one or more elements selected from Mn, Co, Ni, Fe, Cr, and V. Examples of metal oxides having at least one transition metal include $LiCoO_2$, $LiNi_{0.8}Co_{0.15}Al_{0.05}O_2$, $LiMn_2O_4$, $LiNiVO_4$, $LiNi_{0.5}Mn_{1.5}O_4$, $LiNi_{1/3}Mn_{1/3}Co_{1/3}O_4$, and $LiFePO_4$.

For the purpose of inhibiting the reaction between the active material 20 and the solid electrolyte 19, a coating layer can be provided on the surface of the active material 20. Examples of coating layers include $Al_2O_3$, $ZrO_2$, $LiNbO_3$, $Li_4Ti_5O_{12}$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, and $Li_2MoO_4$.

Examples of sulfur active materials include S, $TiS_2$, $NiS$, $FeS_2$, $Li_2S$, $MoS_3$, and sulfur-carbon composites. Examples of organic active materials include radical compounds, typified by 2,2,6,6-tetramethylpyperidinoxyl-4-yl methacrylate and polytetramethylpiperidinoxyl vinyl ether, quinone compounds, radialene compounds, tetracyanoquinodimethane, and phenazine oxide.

The electrolyte layer 15 is made of a lithium ion conductor 10. The lithium ion conductor 10 contains a solid electrolyte 19 and an electrolyte solution. The lithium ion conductor 10 may further contain a binder. The electrolyte layer 15 in this embodiment is a separator. A separator is a component that separates a positive electrode layer 12 and a negative electrode layer 16 to electrically isolate them from each other.

The negative electrode layer 16 is a stack of a current-collecting layer 17 and a composite layer 18. The current-collecting layer 17 is a component having electric conductivity. Examples of materials for the current-collecting layer 17 include a metal selected from Ni, Ti, Fe, Cu, and Si, an alloy containing two or more of these elements, stainless steel, and a carbon material.

The composite layer 18 contains a lithium ion conductor 10 and an active material 21. To reduce the resistance of the composite layer 18, a conductive additive may be contained in the composite layer 18. Examples of conductive additives include carbon black, acetylene black, Ketjenblack, carbon fiber, Ni, Pt, and Ag. Examples of active materials 21 include Li, a Li-Al alloy, $Li_4Ti_5O_{12}$, graphite, In, Si, a Si-Li alloy, and SiO. Similar to the electrolyte layer 15, the composite layers 14 and 18 may contain a binder.

The power storage device 11 is manufactured by, for example, as follows. A slurry is prepared by mixing a solution of a binder in a solvent into a mixture of a solid electrolyte 19 and an organic solvent in which a lithium salt has been dissolved. After being shaped into tape, the slurry is dried to give a green sheet for the electrolyte layer 15 (electrolyte sheet).

A slurry is prepared by mixing an active material 20 and then a solution of a binder in a solvent into a mixture of a solid electrolyte 19 and an organic solvent in which a lithium salt has been dissolved. After being shaped into tape on a current-collecting layer 13, the slurry is dried to give a green sheet for the positive electrode layer 12 (positive electrode sheet).

A slurry is prepared by mixing an active material 21 and then a solution of a binder in a solvent into a mixture of a solid electrolyte 19 and an organic solvent in which a lithium salt has been dissolved. After being shaped into tape on a current-collecting layer 17, the slurry is dried to give a green sheet for the negative electrode layer 16 (negative electrode sheet).

The electrolyte sheet, positive electrode sheet, and negative electrode sheet are each cut into a predetermined shape, and then the cut sheets are stacked in the order of the positive electrode sheet first, then the electrolyte sheet, followed by the negative electrode sheet, and laminated together into an integrated structure. By connecting a terminal (not illustrated) to each of the current-collecting layers 13 and 17 and enclosing the assembly in a case (not illustrated), a power storage device 11 including a positive electrode layer 12, an electrolyte layer 15, and a negative electrode layer 16 is obtained. As can be seen, a sheet containing a solid electrolyte 19 can turn into an electrolyte sheet, a positive electrode sheet, and a negative electrode sheet depending on the mixture.

The solid electrolyte 19 is a composite oxide containing Li, La, Zr, and O and having a garnet-type or garnet-like crystal structure. This kind of garnet-type or garnet-like crystal structure is represented by the general formula $C_3A_2B_3O_{12}$.

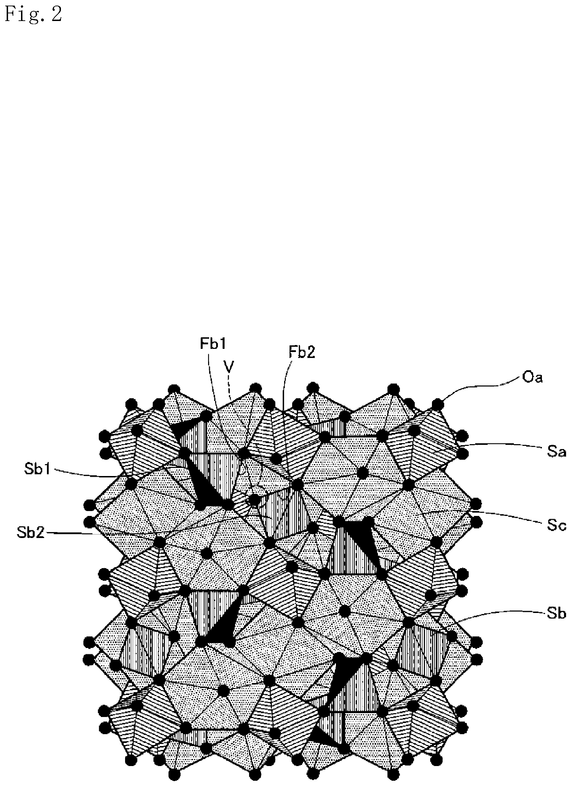

Fig. 2 is a diagram schematically illustrating a garnet-type or garnet-like crystal structure. In a garnet-type crystal structure, the C-site Sc is dodecahedrally coordinated with oxygen atoms Oa, the A-site Sa is octahedrally coordinated with oxygen atoms Oa, and the B-site Sb is tetrahedrally coordinated with oxygen atoms Oa. The solid electrolyte 19 can have Li at positions that are usually octahedrally coordinated with oxygen atoms Oa in the typical garnet-type crystal structure but are voids V. An example of a void V is the point sandwiched between a B-site Sb1 and a B-site Sb2. Li present in the void V is octahedrally coordinated with the oxygen atoms Oa constituting the octahedron including a face Fb1 of the tetrahedron forming the B-site Sb1 and a face Fb2 of the tetrahedron forming the B-site Sb2. For example, in $Li_7La_3Zr_2O_{12}$, which has a garnet-type crystal structure, La occupies the C-site Sc, Zr occupies the A-site Sa, and Li can occupy the B-site Sb and voids V.

Garnet-type or garnet-like crystal structures can be identified by X-ray diffraction. These structures have an XRD pattern similar to that of X-ray diffraction file No. 422259 ($Li_7La_3Zr_2O_{12}$) in the CSD (Cambridge Structural Database). Compared with No. 422259, the solid electrolyte 19 can differ in diffraction angles and peak intensity ratios because of potential differences in parameters such as the types of constituent elements and the Li concentration. A typical crystal structure of this type is a cubic system (space group Ia-3d (where - indicates an overline representing a rotatory inversion operation); JCPDS, 84-1753).

A description will be made referring back to Fig. 1. A typical example of a solid electrolyte 19 is $Li_7La_3Zr_2O_{12}$. The solid electrolyte 19 may have a subset of its constituent elements replaced with additional elements and may be doped with trace amounts of additional elements without its constituent elements replaced. An example of additional elements is at least one element selected from the group consisting of Mg, Al, Si, Ca, Ti, V, Ga, Sr, Y, Nb, Sn, Sb, Ba, Hf, Ta, W, Bi, Rb, and lanthanoids (excluding La).

Examples of solid electrolytes 19 include $Li_6La_3Zr_{1.5}W_{0.5}O_{12}$, $Li_{6.15}La_3Zr_{1.75}Ta_{0.25}Al_{0.2}O_{12}$, $Li_{6.15}La_3Zr_{1.75}Ta_{0.25}Ga_{0.2}O_{12}$, $Li_{6.25}La_3Zr_2Ga_{0.25}O_{12}$, $Li_{6.4}La_3Zr_{1.4}Ta_{0.6}O_{12}$, $Li_{6.5}La_3Zr_{1.75}Te_{0.25}O_{12}$, $Li_{6.75}La_3Zr_{1.75}Nb_{0.25}O_{12}$, $Li_{6.9}La_3Zr_{1.675}Ta_{0.289}Bi_{0.036}O_{12}$, $Li_{6.46}Ga_{0.23}La_3Zr_{1.85}Y_{0.15}O_{12}$, $Li_{6.8}La_{2.95}Ca_{0.05}Zr_{1.75}Nb_{0.25}O_{12}$, $Li_{7.05}La_{3.00}Zr_{1.95}Gd_{0.05}O_{12}$, and $Li_{6.20}Ba_{0.30}La_{2.95}Rb_{0.05}Zr_2O_{12}$.

For use as the solid electrolyte 19, an electrolyte that contains at least one of Mg or element A (A is at least one element selected from the group consisting of Ca, Sr, and Ba) with the molar ratios between the elements satisfying all of (1) to (3) below or that contains both Mg and element A with the molar ratios between the elements satisfying all of (4) to (6) below is particularly suitable. Element A is preferably Sr because it increases the ion conductivity of the solid electrolyte 19.

(1)

$$1.33 \leq Li/(La + A) \leq 3$$

(2)

$$0 \leq Mg/(La + A) \leq 0.5$$

(3)

$$0 \leq A/(La + A) \leq 0.67$$

(4)

$$2.0 \leq Li/(La + A) \leq 2.5$$

(5)

$$0.01 \leq Mg/(La + A) \leq 0.14$$

(6)

$$0.04 \leq A/(La + A) \leq 0.17$$

The median diameter for the equivalent circular diameter of the solid electrolyte 19 that appears in a cross-section of the electrolyte layer 15 is preferably from 0.5 to 10 $\mu$m, more preferably from 0.5 to 6 um. This is to ensure that the surface area of the solid electrolyte 19 is an appropriate size and thereby to allow a sufficient quantity of Li ions to travel between the solid electrolyte 19 and the electrolyte solution interposed between surfaces of the solid electrolyte 19.

To determine the median diameter of the solid electrolyte 19, a scanning electron microscope (SEM) image of the solid electrolyte 19 that appears in a cross-section of the electrolyte layer 15 (a polished surface, a surface obtained through focused ion beam (FIB) irradiation, or a surface obtained by ion milling) is analyzed first. The equivalent circular diameter is calculated from the area of each particle of the solid electrolyte 19, and the volume-based particle size distribution is determined. The median diameter is the equivalent circular diameter at which the cumulative frequency in the particle size distribution reaches 50%. The image used to determine the particle size distribution should have an area within the electrolyte layer 15 of 400 $\mu$m$^2$ or more to ensure sufficient accuracy.

The lithium ion conductor 10 may contain one or multiple additional solid electrolytes in addition to the solid electrolyte 19 containing Li, La, Zr, and O and having a garnet-type or garnet-like crystal structure. Examples of additional solid electrolytes include perovskite, NASICON, LISICON, and other crystalline or amorphous oxide solid electrolytes and hydride solid electrolytes.

Examples of perovskite solid electrolytes include oxides containing at least Li, Ti, and La, such as $La_{2/3-x}Li_{3x}TiO_3$. Examples of NASICON solid electrolytes include oxides containing at least Li, M (where M is one or more elements selected from Ti, Zr, and Ge), and P, such as $Li(Al,Ti)_2(PO_4)_3$ and $Li(Al,Ge)_2(PO4)_3$. An example of a LISICON solid electrolyte is $Li_{14}Zn(GeO_4)_4$. Examples of hydride solid electrolytes include alkali metal or alkaline earth metal hydrides that contain at least one of the group-13 elements (e.g., B, Al, Ga, In, and Ta) in the 18-group Periodic Table of Elements. Examples include $LiBH_4$ and $LiAlH_4$.

The lithium ion conductor 10 contains an electrolyte solution in which a lithium salt is dissolved in at least one organic solvent. The lithium salt is a compound used for the exchange of cations between the positive electrode layer 12 and the negative electrode layer 16. Examples of anions in the lithium salt include halide ions (e.g., I⁻, Cl⁻, and Br⁻), SCN⁻, $BF_4^-$, $BF_3(CF_3)^-$, $BF_3(C_2F_5)^-$, $PF_6^-$, $ClO_4^-$, $SbF_6^-$, $N(SO_2F)_2^-$, $N(SO_2CF_3)_2^-$, $N(SO_2C_2F_5)_2^-$, $B(C_6H_5)_4^-$, $B(O_2C_2H_4)_2^-$, $C(SO_2F)_3^-$, $C(SO_2CF_3)_3^-$, $CF_3COO^-$, $CF_3SO_2O^-$, $C_6F_5SO_2O^-$, $B(O_2C_2O_2)_2^-$, and RCOO⁻ (where R is an alkyl group having one to four carbon atoms, a phenyl group, or a naphthyl group).

The anion in the lithium salt is preferably a sulfonyl imide, such as $N(SO_2F)_2^-$, $N(SO_2CF_3)_2^-$, or $N(SO_2C_2F_5)_2^-$, each of which has a sulfonyl group $-S(=O)_2-$. This is because the sulfonyl imide anion is minimally affected by increased viscosity and reduced ion conductivity of the electrolyte solution even when the salt concentration is high, and because it allows the potential window on the reducing side to be expanded by reducing the reductive decomposition of the electrolyte solution through the formation of a high-stability and low-resistance coating (SEI).

$N(SO_2F)_2^-$ may be referred to using an abbreviation as [FSI]⁻: bis (fluorosulfonyl) imide anion, and $N(SO_2CF_3)_2^-$ may be referred to as using an abbreviate as [TFSI]⁻. bis(trifluoromethanesulfonyl)imide anion. The lithium salt is particularly preferably lithium bis(fluorosulfonyl)imide (Li-FSI). This is because Li-FSI is minimally affected by increased viscosity of the electrolyte solution and because it is effective in forming a good passivation film (SEI).

The organic solvent includes sulfolane or a sulfolane derivative. The sulfolane or sulfolane derivative is advantageous for increasing the voltage of the power storage device 11 by virtue of its high oxidation resistance. Examples of sulfolane derivatives include those in which one or more hydrogen atoms bound to the carbon atoms constituting the sulfolane ring have been replaced, for example by a fluorine atom or alkyl group. Examples of sulfolane derivatives include fluorosulfolane, difluorosulfolane, methylsulfolane, and dimethylsulfolane. Both of sulfolane and a sulfolane derivative may be included in the organic solvent.

For the lithium ion conductor 10, the molality of the lithium salt in the electrolyte solution in which a lithium salt is dissolved in at least one organic solvent is 1.4 mol/kg or more, preferably 1.6 mol/kg or more. This leads to an increased number of solvent molecules coordinated with Li ions and a reduced number of non-coordinated solvents compared with typical electrolyte solutions, in which the salt concentration is around 1 mol/kg, thereby allowing the interfacial resistance of the solid electrolyte 19 to be reduced.

The electrolyte solution can contain a solvated ionic liquid. The solvated ionic liquid is composed of Li ions solvated by sulfolane or a sulfolane derivative and their counterions. The electrolyte solution can be in a state in which all solvent molecules are coordinated with Li ions, with non-coordinated solvents eliminated, or a state in which all solvent molecules are coordinated with Li ions, with non-coordinated solvents eliminated, and an excess of Li ions not coordinated by solvent molecules is present. In an electrolyte solution with a high salt concentration in which Li ions have been solvated by sulfolane or a sulfolane derivative, Li ions diffuse specifically faster than anions and solvent molecules.

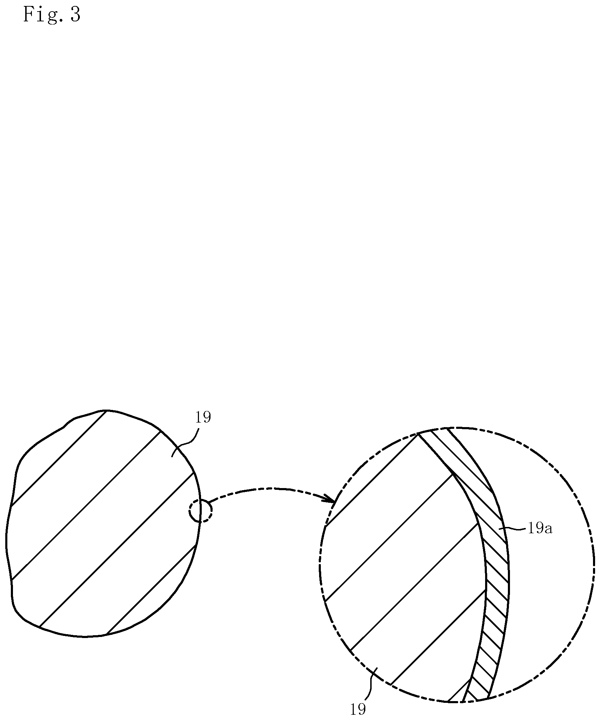

Fig. 3 is a cross-sectional view of the solid electrolyte 19 contained in the lithium ion conductor 10. The lithium ion conductor 10 includes a coating 19a chemically bound to the surface of the solid electrolyte 19. The coating 19a covers at least one part of the surface of the solid electrolyte 19. The elements constituting the coating 19a include S and F derived from the electrolyte solution, with the relative concentration ratio F/S of F to S being 2.9 or greater. The inventors presume that the coating 19a inhibits the reaction between the electrolyte solution and the solid electrolyte 19, playing the role of reducing the interfacial resistance of the solid electrolyte 19.

The elemental composition and the state of chemical binding of the coating 19a can be detected by X-ray photoelectron spectroscopy (XPS). The thickness of the coating 19a is estimated to be approximately 5 nm based on the detection depth in XPS. The chemical binding (chemical adsorption) of the coating 19a to the surface of the solid electrolyte 19 can be confirmed based on the chemical shifts at the peak positions (values of binding energy) in XPS, which vary depending on the state of chemical binding. The peak present at 685 eV is attributed to F1s, which is of fluorine, and the peak present at 167 eV is attributed to S2p, which is of sulfur. The area intensities for the peak intensities at 685 eV and 167 eV are each calculated, and the relative concentration ratio F/S of F to S constituting the coating 19a chemically bound to the surface of the solid electrolyte 19 is determined by a relative sensitivity factor method using instrument-specific sensitivity coefficients.

A description will be made referring back to Fig. 1. The lithium ion conductor 10 may contain at least one additional organic solvent in addition to the sulfolane or sulfolane derivative. The additional organic solvent contributes to, for example, reducing the viscosity of the electrolyte solution and increasing the ion conductivity of the electrolyte solution. Examples of additional organic solvents include propylene carbonate, dimethyl carbonate, diethyl carbonate, ethyl methyl carbonate, trimethyl phosphate, triethyl phosphate, $\gamma$-butyrolactone, dimethyl methylphosphonate, acetonitrile, isobutyl methyl ketone, nitromethane, methyl ethyl ketone, and tetramethylsilane. As the additional organic solvents, one or two or more solvents unlikely to affect the coordination state of Li ions and solvent molecules are selected as appropriate.

As for the percentage (wt%) of the sulfolane or sulfolane derivative to the total of the sulfolane or sulfolane derivative and additional organic solvents contained in the lithium ion conductor 10, 75% or more is suitable. This is to ensure a sufficiently large transference number for Li ions.

The salt concentration of the electrolyte solution is preferably 4.0 mol/kg or less. This is because when the salt concentration of the electrolyte solution exceeds 4.0 mol/kg, there is a pronounced tendency for the percentage lithium ion conductivity to decrease with an increase in the viscosity of the electrolyte solution.

For the lithium ion conductor 10, furthermore, the percentage of the volume of the solid electrolyte 19 to the total of the volume of the solid electrolyte 19 and the volume of the electrolyte solution is 52% or more and less than 100%, preferably 61% or more and less than 100%. Since the interfacial resistance of the solid electrolyte 19 can be significantly reduced with the combination of the solid electrolyte 19 and the electrolyte solution, the transference number for Li ions of the lithium ion conductor 10 can be made greater than the transference number for Li ions of typical electrolyte solutions. As a result, stability in the operation of the power storage device 11 in which the lithium ion conductor 10 has been placed increases.

In the lithium ion conductor 10, a binder that binds the solid electrolyte 19 may be contained. Examples of binders include fluorinated resins, polyolefins, polyimides, polyvinyl pyrrolidone, polyvinyl alcohol, cellulose ethers, and styrene butadiene rubber and other rubber-like polymers. Examples of fluorinated resins include vinylidene fluoride polymers, polychlorotrifluoroethylene, polyvinyl fluoride, tetrafluoroethylene-perfluoroalkyl vinyl ether copolymers, tetrafluoroethylene-hexafluoropropylene copolymers, ethylene tetrafluoroethylene copolymers, and ethylene-chlorotrifluoroethylene copolymers.

Examples of vinylidene fluoride polymers include the homopolymer of vinylidene fluoride and copolymers of vinylidene fluoride and at least one copolymerizable monomer. Examples of copolymerizable monomers include halogen-containing monomers (excluding vinylidene fluoride) and non-halogenated copolymerizable monomers. Examples of halogen-containing monomers include chlorine-containing monomers, such as vinyl chloride; and fluorine-containing monomers, such as trifluoroethylene, tetrafluoroethylene, chlorotrifluoroethylene, hexafluoropropylene, and perfluoroalkyl vinyl ethers. Examples of non-halogenated copolymerizable monomers include olefins, such as ethylene and propylene; acrylic monomers, such as acrylic acid, methacrylic acid, and their esters or salts; and vinyl monomers, such as acrylonitrile, vinyl acetate, and styrene. One or two or more copolymerizable monomers polymerize with vinylidene fluoride to constitute a copolymer.

The salt concentration of the electrolyte solution contained in the lithium ion conductor 10 is determined, for example, as follows. The lithium ion conductor 10 constituting the electrolyte layer 15 will be described here, but the lithium ion conductors 10 that constitute the composite layers 14 and 18 can also be determined in the same manner.

First, a crushed form of the electrolyte layer 15 is soaked in a solvent, through which the electrolyte solution contained in the electrolyte layer 15 is dissolved in the solvent. Then the mixture is separated into a solid component and a liquid component using a centrifuge. With the separated liquid component as the analyte, the Li content is determined by radiofrequency inductively coupled plasma analysis (ICP).

The types of organic solvents contained in the electrolyte layer 15, furthermore, are identified, for example by gas chromatograph mass spectrometry (GC-MS). Using thermogravimetry-differential thermal analysis (TG-DTA), an analysis of organic solvents identified in terms of type (hereinafter referred to as "reference materials") and an analysis of the electrolyte layer 15 are performed. By comparing the results of the analysis of reference materials and the results of the analysis of the electrolyte layer 15, the amount of organic solvents contained in the electrolyte layer 15 is determined. Based on the Li content of the liquid component and the organic solvent content of the electrolyte layer 15, the molality (mol/kg) of the lithium salt in the electrolyte solution is calculated.

The amounts (% by volume) of the solid electrolyte 19 and the electrolyte solution are determined by freezing the electrolyte layer 15 or embedding and fixing the electrolyte layer 15, for example in a tetrafunctional epoxy resin, and performing an analysis using an SEM equipped with an energy-dispersive X-ray spectrometer (EDS), with a $5000\times$ field of view randomly selected from a cross-section of the electrolyte layer 15 as the subject of observation. In the analysis, the area of the solid electrolyte 19 and the area of the electrolyte solution are determined, for example by measuring the distribution of La, Zr, and S or through an image analysis of the contrast of a backscattered electron image, and the amounts (% by volume) of the solid electrolyte 19 and the electrolyte solution are obtained by regarding the percentages of the areas in the cross-section of the electrolyte layer 15 as the percentages of volumes in the lithium ion conductor 10 in the electrolyte layer 15.

The percentage Li ion conductivity of the lithium ion conductor 10 is determined by factors such as the types of the solid electrolyte 19, lithium salt, and organic solvent(s) and the salt concentration. The percentage lithium ion conductivity of the lithium ion conductor 10 at 25°C is preferably $4.0 \times 10^{-5}$ S/cm or more. This is to ensure a sufficiently high power density of the power storage device 11 that contains the lithium ion conductor 10.

Since the lithium ion conductor 10 contains anions derived from the electrolyte solution, the percentage Li ion conductivity of the lithium ion conductor 10 is calculated by multiplying the total ion conductivity, determined by the AC impedance method, of a symmetric cell obtained by tightly attaching a current collector to both sides of the lithium ion conductor 10 shaped into a sheet by the transference number for Li ions. The transference number for Li ions is determined by the AC impedance method and the steady-state DC method.

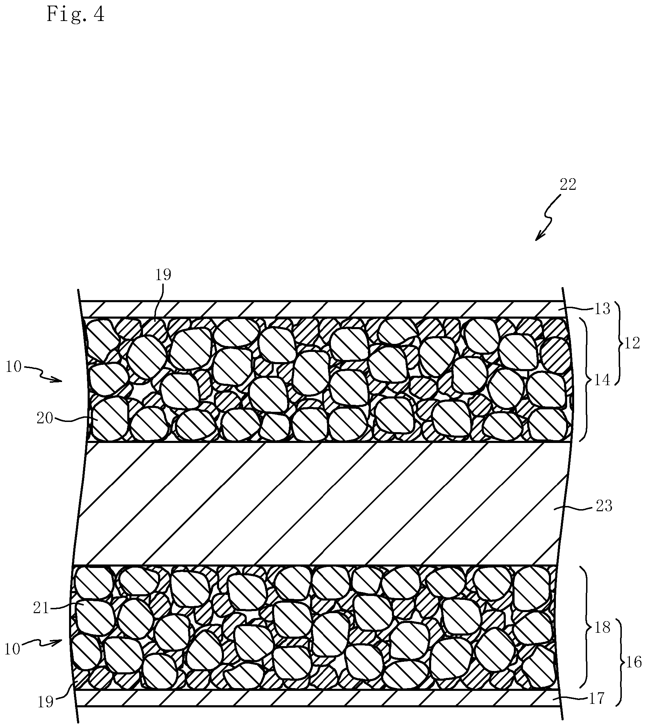

A second embodiment will be described with reference to Fig. 4. In the first embodiment, a case in which the lithium ion conductor 10 is applied to a secondary battery whose power-generating element is composed of solids was described. In the second embodiment, a case in which the lithium ion conductor 10 is applied to a liquid lithium ion battery, which uses an organic solvent in the electrolyte, will be described. For portions identical to the portions described in the first embodiment, the same numerals will be given to them, and their description in the following will be omitted. Fig. 4 is a cross-sectional view of a power storage device 22 in the second embodiment.

The power storage device 22 includes a positive electrode layer 12, a separator 23, and a negative electrode layer 16 in sequence. These are housed in a case (not illustrated). The separator 23 is made of a porous material that has resistance to active materials 20 and 21 contained in the positive electrode layer 12 and the negative electrode layer 16 and to the electrolyte solution and that allows lithium ions to pass through but has no electron conductivity. Examples of separators 23 include nonwoven fabric and a porous membrane made from, for example, cellulose, polypropylene, or polyethylene. For the electrolyte solution, its description will be omitted because it is identical to that described in the first embodiment.

The power storage device 22 in the second embodiment achieves increased stability in operation, similar to the power storage device 11 in the first embodiment, by virtue of the lithium ion conductor 10 being contained in the positive electrode layer 12 and the negative electrode layer 16. This allows the rate characteristics and the cycle life to be improved.

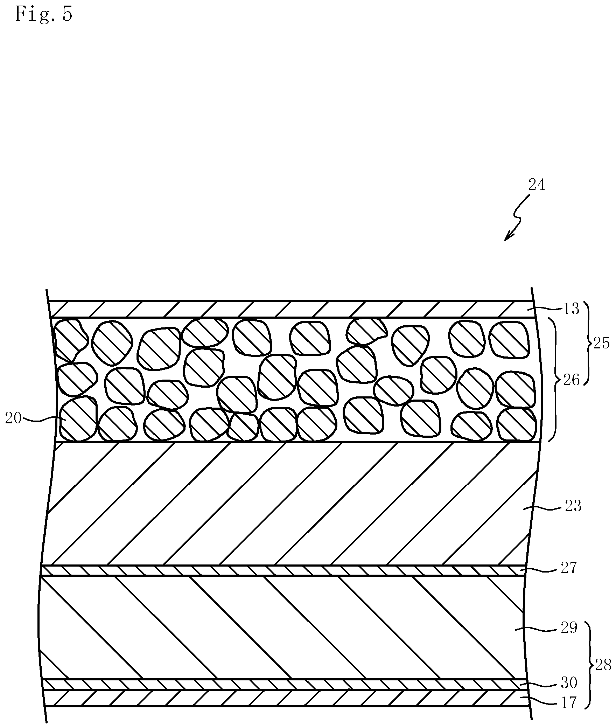

A third embodiment will be described with reference to Fig. 5. In the first and second embodiments, a case in which the lithium ion conductor 10 is contained in the positive electrode layer 12, electrolyte layer 15, and negative electrode layer 16 was described. In the third embodiment, a case in which the lithium ion conductor 10 is contained in protective layers 27 and 30 will be described. For portions identical to the portions described in the first or second embodiment, the same numerals will be given to them, and their description in the following will be omitted. Fig. 5 is a cross-sectional view of a power storage device 24 in the third embodiment.

The power storage device 24 includes a positive electrode layer 25, a separator 23, and a negative electrode layer 28 in sequence. These are housed in a case (not illustrated). The power storage device 24 is a liquid lithium ion battery, which uses an organic solvent in the electrolyte.

The positive electrode layer 25 is a stack of a current-collecting layer 13 and an active material layer 26. The active material layer 26 contains an active material 20. To reduce the resistance of the active material layer 26, a conductive additive, such as carbon black, acetylene black, Ketjenblack, carbon fiber, Ni, Pt, or Ag, may be contained in the active material layer 26.

A protective layer 27 has been placed between the separator 23 and the negative electrode layer 28. The protective layer 27 contains a lithium ion conductor 10.

The negative electrode layer 28 is a stack of an active material layer 29, a protective layer 30, and a current-collecting layer 17 stacked in sequence. The active material layer 29 is made of, for example, Li, a Li-Al alloy, a Li-Sn alloy, a Li-Si alloy, a Li-Mg alloy, a Li-Si alloy, or a Si-Li alloy. The protective layer 30 contains a lithium ion conductor 10. The protective layers 27 and 30 are placed through, for example, the layering of a sheet or coating onto the separator 23 or current-collecting layer 17.

The solid electrolyte 19 containing Li, La, Zr, and O and having a garnet-type or garnet-like crystal structure, contained in the lithium ion conductor 10, has reduction resistance to the metallic lithium in the active material layer 29. Stability in the operation of the power storage device 24, therefore, increases. The protective layer 27 interposed between the active material layer 29 and the separator 23, furthermore, reduces short-circuiting caused by dendritic growth of the metallic lithium. The protective layer 30 interposed between the active material layer 29 and the current-collecting layer 17 limits the alteration of the current-collecting layer 17.

EXAMPLES

The present invention will be described in further detail with examples, but the present invention is not limited to these examples.

(EXAMPLE 1)

(Preparation of a Solid Electrolyte)

$Li_2CO_3$, MgO, $La(OH)_3$, $SrCO_3$, and $ZrO_2$ were weighed out to make $Li_{6.95}Mg_{0.15}La_{2.75}Sr_{0.25}Zr_{2.0}O_{12}$. $Li_2CO_3$ was used approximately 15 mol% more than necessary on an element basis considering the volatilization of Li during firing. The raw materials weighed out and ethanol were placed into a nylon pot together with zirconia balls and crushed and mixed in a ball mill for 15 hours. Slurry taken out from the pot was dried and then calcined (1 hour at 900°C) on a MgO plate. The calcined powder and ethanol were placed into a nylon pot and crushed and mixed in a ball mill for 15 hours.

Slurry taken out from the pot was dried and then placed into a metallic mold having a diameter of 12 mm. Through press molding, a molded product having a thickness of approximately 1.5 mm was obtained. A hydrostatic pressure of 1.5 $t/cm^2$ was further applied to the molded product using a cold isostatic press (CIP). The molded product was covered with a calcined powder having the same composition as the molded product and fired (4 hours at 1100°C) in a reducing atmosphere, yielding a sintered oxide. The percentage lithium ion conductivity of the sintered oxide as determined by the AC impedance method was $1.0 \times 10^{-3}$ S/cm. The conditions for measuring the percentage lithium ion conductivity were a temperature of 25°C, a voltage of 10 mV, and frequencies from 7 MHz to 100 mHz.

The sintered oxide was crushed in an Ar atmosphere using a mortar, giving a solid electrolyte (LLZ) in powder form. The median diameter in the particle size distribution of the solid electrolyte as measured by laser diffraction and scattering was approximately 3 $\mu$m.

(Preparation of Electrolyte Solutions)

Various electrolyte solutions with different salt concentrations were obtained by combining the lithium salt $LiN(SO_2F)_2$ (Li-FSI) with sulfolane in various proportions.

(Preparation of Lithium Ion Conductors)

Various lithium ion conductors made of combined powder were obtained by mixing the solid electrolyte (LLZ) and an electrolyte solution in a mortar in an Ar atmosphere to achieve predetermined percentages (ratio by volume).

(Preparation of a Lithium Ion Conductor in Comparative Example 1)

A comparative-example electrolyte solution was obtained by combining the lithium salt $LiN(SO_2F)_2$ (Li-FSI) with the ionic liquid 1-methyl-1-propylpyrrolidinium bis(fluorosulfonyl)imide (P13FSI) to make the salt concentration 2.3 mol/kg. The solid electrolyte (LLZ) and the comparative-example electrolyte solution were mixed in a mortar in an Ar atmosphere in such a manner that the percentage of the solid electrolyte to the lithium ion conductor would be 61% by volume, through which a lithium ion conductor in Comparative Example 1, made of combined powder, was obtained.

(Preparation of Lithium Ion Conductors in Comparative Example 2)

Alumina powder and an electrolyte solution having a salt concentration of 2.7 mol/kg (Li-FSI combined with sulfolane) were mixed in a mortar in an Ar atmosphere to achieve predetermined percentages (ratio by volume), through which lithium ion conductors in Comparative Example 2, made of combined powder, were obtained. The median diameter in the particle size distribution of the alumina powder as measured by laser diffraction and scattering was approximately 0.5 $\mu$m.

(Calculation of the Transference Number)

The combined powder (lithium ion conductor) was placed into a cylinder made of an insulator with a bore diameter of 10 mm in an Ar atmosphere, and uniaxial molding was performed by applying a pressure of 50 MPa to the combined powder to give a disk-shaped molded product (a powder compact having a thickness of approximately 0.5 mm). The molded product was taken out from inside the cylinder, and a sheet of Li foil having a diameter of 9 mm was attached to both sides of the molded product. Then the molded product with attached Li foil and sheets of Cu foil each having a diameter of 10 mm were situated in the cylinder in such a manner that the Cu foil would come into contact with the Li foil on both sides of the molded product. Axial tension from a screw with an applied clamp torque of 8 N was applied to the Cu foil, through which a symmetric cell composed of a molded product and Li foil adhering to it was obtained.

First, a constant voltage V was applied to the symmetric cell, and the current I after the steady state was reached was measured. According to equation A below, the resistance $R_P$ of the symmetric cell in the steady state was calculated. $R_P = V/I$ ... A. The conditions for measuring the current at the steady state were a voltage of 3 mV, a total duration of 4 hours, and a measurement interval of 60 seconds.

Then the resistance $R_S$ and interfacial resistance $R_{INT}$ of the symmetric cell that had reached the steady state were analyzed by AC impedance measurement. The conditions for the AC impedance measurement were a temperature of 25°C, a voltage of 10 mV, and frequencies from 7 MHz to 100 mHz.

The transference number $t_{Li}$ was calculated by substituting the resistance $R_S$, resistance $R_P$, and interfacial resistance $R_{INT}$ into equation B below. $t_{Li} = R_S/(R_P - R_{INT})$ ... B

(Results)

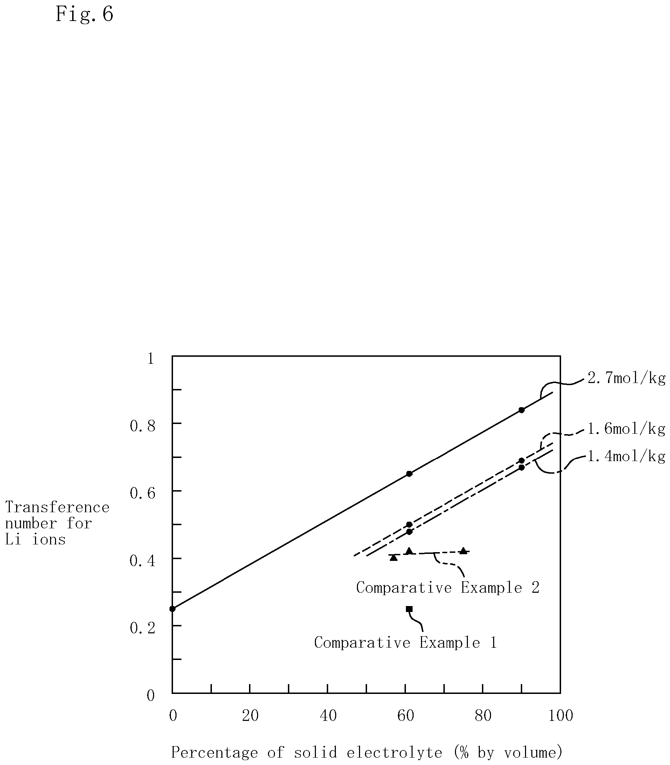

Fig. 6 is a diagram illustrating the relationship between the percentage of the solid electrolyte or alumina in lithium ion conductors and the transference number for Li ions. In Fig. 6, the percentage of the volume of the solid electrolyte or alumina (% by volume) to the total of the volume of the solid electrolyte or alumina and the volume of the electrolyte solution is plotted on the horizontal axis, and the transference number $t_{Li}$ for Li ions is plotted on the vertical axis.

The round marks indicate data from lithium ion conductors composed of a solid electrolyte (LLZ) and an electrolyte solution in which Li-FSI was combined with sulfolane. The round marks with a solid line passing through them indicate data at a salt concentration of the electrolyte solution of 2.7 mol/kg, the round marks with a broken line passing through them indicate data at a salt concentration of the electrolyte solution of 1.6 mol/kg, and the round marks with a dash-dot line passing through them indicate data at a salt concentration of the electrolyte solution of 1.4 mol/kg.

The square mark indicates data from the lithium ion conductor in Comparative Example 1, which was composed of a solid electrolyte (LLZ) and an electrolyte solution in which Li-FSI was combined with P13FSI (salt concentration, 2.3 mol/kg). The triangle marks indicate data from the lithium ion conductors in Comparative Example 2, which were composed of alumina and an electrolyte solution in which Li-FSI was combined with sulfolane (salt concentration, 2.7 mol/kg).

As illustrated in Fig. 6, the lithium ion conductors containing an electrolyte solution in which the organic solvent was sulfolane (round marks) tended to have a significantly great transference number for Li ions compared with the lithium ion conductor containing an electrolyte solution in which the organic solvent was P13FSI (Comparative Example 1). When the organic solvent in the electrolyte solution was sulfolane, the transference number for Li ions tended to become greater with increasing percentage of the solid electrolyte at a fixed salt concentration of the electrolyte solution. At a fixed percentage of the solid electrolyte, the transference number for Li ions tended to become greater with increasing salt concentration of the electrolyte solution, from 1.4 mol/kg to 1.6 mol/kg and then to 2.7 mol/kg.

For the lithium ion conductors composed of LLZ and an electrolyte solution in which Li-FSI was combined with sulfolane (salt concentration, 1.4 mol/kg) (the dash-dot line), it was found that the transference number for Li ions becomes greater than 0.42, the maximum transference number for Li ions of the lithium ion conductors in Comparative Example 2, when the percentage of LLZ is 52% by volume or more. When these conductors are compared with Comparative Example 1, which contained P13FSI, it is obvious that sulfolane in the electrolyte solution is effective in increasing the transference number for Li ions. It was revealed that with a lithium ion conductor that is composed of LLZ and an electrolyte solution containing sulfolane with a salt concentration of 1.4 mol/kg or more and in which the percentage of LLZ is 52% by volume or more and less than 100%, the transference number for Li ions can be made greater than with a typical electrolyte solution.

For the lithium ion conductors composed of LLZ and an electrolyte solution in which Li-FSI was combined with sulfolane (salt concentration, 1.6 mol/kg) (the broken line), it was found that the transference number for Li ions becomes greater than 0.42, the maximum transference number for Li ions of the lithium ion conductors in Comparative Example 2, when the percentage of LLZ is 50% by volume or more. It was revealed that with a lithium ion conductor that is composed of LLZ and an electrolyte solution containing sulfolane with a salt concentration of 1.6 mol/kg or more and in which the percentage of LLZ is 50% by volume or more and less than 100%, the transference number for Li ions can be made greater than with a typical electrolyte solution.

For the lithium ion conductors composed of LLZ and an electrolyte solution in which Li-FSI was combined with sulfolane (salt concentration, 1.6 mol/kg) (the broken line), it was found that the transference number for Li ions can be 0.5 or greater when the percentage of LLZ is 61% by volume or more. It was revealed that with a lithium ion conductor that is composed of LLZ and an electrolyte solution containing sulfolane with a salt concentration of 1.6 mol/kg or more and in which the percentage of LLZ is 61% by volume or more and less than 100%, the transference number for Li ions can be made even greater.

For the lithium ion conductors composed of LLZ and an electrolyte solution in which Li-FSI was combined with sulfolane (salt concentration, 1.4 mol/kg) (the dash-dot line), it was found that the transference number for Li ions can be 0.5 or greater when the percentage of LLZ is 65% by volume or more. It was revealed that with a lithium ion conductor that is composed of LLZ and an electrolyte solution containing sulfolane with a salt concentration of 1.4 mol/kg or more and in which the percentage of LLZ is 65% by volume or more and less than 100%, the transference number for Li ions can be made even greater.

For the lithium ion conductors composed of LLZ and an electrolyte solution in which Li-FSI was combined with sulfolane (salt concentration, 2.7 mol/kg) (the solid line), it was found that the transference number for Li ions can be 0.5 or greater when the percentage of LLZ is 37% by volume or more. It was revealed that with a lithium ion conductor that is composed of LLZ and an electrolyte solution containing sulfolane with a salt concentration of 2.7 mol/kg or more and in which the percentage of LLZ is 37% by volume or more and less than 100%, the transference number for Li ions can be made even greater.

(EXAMPLE 2)

In Example 2, the transference number for Li ions of electrolyte sheets containing a lithium ion conductor and the rate characteristics of power storage devices made using the electrolyte sheets were measured.

(Preparation of an Electrolyte Sheet)

An electrolyte solution was obtained by combining the lithium salt Li-FSI with sulfolane to make the salt concentration 2.7 mol/kg. This electrolyte solution and the solid electrolyte prepared in Example 1 (LLZ) were mixed in a mortar in an Ar atmosphere, through which an example lithium ion conductor was obtained. A binder solution in which a polyvinylidene fluoride-hexafluoropropylene copolymer (PVdF-HFP) was dissolved in dimethyl carbonate was mixed into the lithium ion conductor in such a manner that LLZ:electrolyte solution:PVdF-HFP = 55:36:9 (ratio by volume), and the resulting mixture was shaped into a film, through which an example electrolyte sheet having a thickness of approximately 40 um was obtained.

(Preparation of a Comparative-Example Electrolyte Sheet)

A comparative-example electrolyte solution was obtained by combining the lithium salt Li-FSI with P13FSI to make the salt concentration 2.3 mol/kg. This electrolyte solution and LLZ were mixed in a mortar in an Ar atmosphere, through which a lithium ion conductor in Comparative Example 3 was obtained. The binder solution was mixed into the lithium ion conductor in Comparative Example 3 in such a manner that LLZ:electrolyte solution:PVdF-HFP = 55:36:9 (ratio by volume), and the resulting mixture was shaped into a film, through which a comparative-example electrolyte sheet having a thickness of approximately 40 um was obtained.

(Calculation of the Transference Number)

A sheet of Li foil having a diameter of 9 mm was attached to both sides of disks having a diameter of 10 mm obtained by cutting each of the example and comparative-example electrolyte sheets. Then the disks with attached Li foil and sheets of Cu foil each having a diameter of 10 mm were situated in cylinders made of an insulator in such a manner that the Cu foil would come into contact with the Li foil on both sides of the disks. Axial tension from a screw with an applied clamp torque of 8 N was applied to the Cu foil, through which symmetric cells composed of a disk and Li foil adhering to it were obtained. Using the symmetric cells, the transference number was calculated in the same manner as in Example 1.

The transference number for Li ions of the example electrolyte sheet was 0.64. The transference number for Li ions of the comparative-example electrolyte sheet, on the other hand, was 0.08. According to Example 2, it was revealed that with a sheet made from a mixture containing the lithium ion conductor, a great transference number for Li ions can be achieved as with the molded products described in Example 1, which were obtained by compressing the lithium ion conductor.

(Fabrication of a Power Storage Device)

An active material ($LiNi_{1/3}Mn_{1/3}Co_{1/3}O_2$), a conductive additive (carbon fiber), and the example lithium ion conductor were weighed out, and the materials weighed out were mixed in a mortar. Then the binder solution was mixed into them in such a manner that active material:LLZ:electrolyte solution:conductive additive:PVdF-HFP = 58:5:28:1:8 (ratio by volume), giving slurry. The slurry was applied onto aluminum foil, through which a positive electrode sheet in the shape of a film having a thickness of approximately 50 um was obtained.

An active material (natural graphite), a conductive additive (carbon fiber), and the example lithium ion conductor were weighed out, and the materials weighed out were mixed in a mortar. Then the binder solution was mixed into them in such a manner that active material:LLZ:electrolyte solution:conductive additive:PVdF-HFP = 54:10:28:1:7 (ratio by volume), giving slurry. The slurry was applied onto copper foil, through which a negative electrode sheet in the shape of a film having a thickness of approximately 60 um was obtained.

The positive electrode sheet, the negative electrode sheet, and the example electrolyte sheet were cut to a predetermined size. Then the positive electrode sheet with an attached electrolyte sheet and the negative electrode sheet with an attached electrolyte sheet were laminated using a roller press, through which an example power storage device was obtained.

(Fabrication of a Comparative-Example Power Storage Device)

A comparative-example power storage device was obtained in the same manner as the example power storage device, except that the lithium ion conductor in Comparative Example 3 was used instead of the example lithium ion conductor.

(Charge-Discharge Test)

A charge-discharge test of the example and comparative-example power storage devices (cells) was conducted at 25°C. In the test, the cells were charged at a constant current of 0.1C rate until the terminal voltage reached the upper charge voltage limit (4.2 V), and discharged at a constant current of 0.1C rate until the lower discharge voltage limit (2.5 V). The result was used as the initial discharge capacity. After that, charging was performed at a constant current of 0.1C rate, and discharging was performed at a constant current at the discharge rate specified in Table 1, through which the discharge capacity was measured. The percentage of the discharge capacity to the initial discharge capacity was defined as the percentage maintenance of capacity, and the results were presented in Table 1.

[Table 1]

| Crate | Percentage maintenance of capacity (%) | |
|---|---|---|
| | Example | Comparative example |
| 0.5 | 0.98 | 0.80 |
| 1 | 92 | 30 |

(continued)

| Crate | Percentage maintenance of capacity (%) | |
|---|---|---|
| | Example | Comparative example |
| 2 | 78 | 10 |

As shown in Table 1, in the comparative example, the percentage maintenance of capacity was not greatly different from that in the example when the C rate was 0.5. When the C rate was 1 or 2, however, the percentage maintenance of capacity significantly decreased compared with the example. The inventors presume that since the lithium ion conductor contained in the comparative-example cell had a small transference number for Li ions, the electrochemical reaction failed to keep up as the C rate (current density) increased, resulting in reduced utilization of the active material and a smaller extractable amount of electricity. It was revealed that with the lithium ion conductor contained in the example cell, by contrast, a sufficiently high percentage maintenance of capacity of the cell can be ensured by virtue of its large transference number for Li ions.

(EXAMPLE 3)

In Example 3, a coating on the surface of the solid electrolyte (LLZ) was analyzed. First, an electrolyte solution in which the lithium salt Li-FSI was combined with sulfolane to make the salt concentration 0.08 mol/kg, an electrolyte solution in which the lithium salt Li-FSI was combined with sulfolane to make the salt concentration 0.8 mol/kg, and an electrolyte solution in which the lithium salt Li-FSI was combined with sulfolane to make the salt concentration 2.7 mol/kg were prepared. A flat surface of the sintered solid electrolyte (LLZ) having yet to be crushed in Example 1 was polished in an Ar atmosphere, and the electrolyte solution having a salt concentration of 0.08 mol/kg was applied dropwise to the polished surface of the sintered electrolyte. After being allowed to stand, the electrolyte solution on the polished surface was wiped off using wiping paper.

This sintered electrolyte was enclosed in a transfer vessel in an Ar atmosphere, and then the surface of the polished face was analyzed by X-ray photoelectron spectroscopy (XPS). The XPS conditions were: X-rays, AlK$\alpha$ radiation; pass energy, 140 eV; analyzed region, 100 $\mu$m$\Phi$. The area intensities for the peak intensities attributable to F and S chemically bound to the sintered electrolyte, at 685 eV (F1s) and 167 eV (S2p), were each calculated. The atomic percentages (atom%) of F and S were measured by a relative sensitivity factor method using instrument-specific sensitivity coefficients, and the ratio F/S of the atomic percentage of F to the atomic percentage of S was calculated. For the electrolyte solution having a salt concentration of 0.8 mol/kg and the electrolyte solution having a salt concentration of 2.7 mol/kg, too, the measurement of the atomic percentages (atom%) of F and S and the calculation of the ratio of atomic percentages F/S were performed in the same manner.

(Measurement of Interfacial Resistance)

The sintered LLZ having yet to be crushed in Example 1 (a disk having a diameter of 16 mm) was secured by sandwiching it from both sides with an electrically insulating cylinder with a gasket interposed therebetween. The electrolyte solution having a salt concentration of 0.08 mol/kg was introduced into the cylinders to wet both sides of the sintered disk with the electrolyte solution. Then a stainless-steel columnar rod (electrode) was placed into each of the cylinders on both sides of the sintered disk to form a symmetric cell, and the interfacial resistance was measured using the AC impedance method. For the electrolyte solution having a salt concentration of 0.8 mol/kg and the electrolyte solution having a salt concentration of 2.7 mol/kg, too, the interfacial resistance was measured in the same manner.

[Table 2]

| Salt concentration (mol/kg) | Atomic percentage (%) | | F/S | Interfacial resistance ($\Omega \cdot cm^2$) |
|---|---|---|---|---|
| | F(685eV) | S(167eV) | | |
| 0.08 | 11.60 | 22.98 | 0.5 | 327 |
| 0.80 | 14.71 | 6.39 | 2.3 | 109 |
| 2.70 | 14.04 | 2.87 | 4.9 | 18 |
| 1.40 | - | - | 2.9 | - |

Table 2 is a summary of the salt concentration of the electrolyte solution, the atomic percentages of F and S on the surface of the sintered electrolyte, the ratio of atomic percentages F/S, and the interfacial resistance. For the ratio of atomic percentages F/S with an electrolyte solution having a salt concentration of 1.4 mol/kg, the equation of the straight line $y = ax + b$ passing through the three points of (0.08, 0.5), (0.8, 2.3), and (2.7, 4.9) was determined, and the value of y when x = 1.4 on this straight line was used as the ratio.

As the salt concentration of the electrolyte solution increased from 0.08 mol/kg to 0.8 mol/kg and then to 2.7 mol/kg, the interfacial resistance decreased from 327 $\Omega \cdot cm^2$ to 109 $\Omega \cdot cm^2$ and then to 18 $\Omega \cdot cm^2$. For S and F chemically bound to the sintered electrolyte, the atomic percentage of S, derived from sulfolane in the electrolyte solution, was relatively high when the salt concentration of the electrolyte solution was 0.08 mol/kg, and the atomic percentage of F, derived from the lithium salt in the electrolyte solution, was relatively high when the salt concentration was 2.7 mol/kg. It can be presumed that a coating containing F and S chemically bound to the surface of the LLZ contributed to reducing the interfacial resistance of the LLZ. Given that the ratio of atomic percentages F/S at a salt concentration of 1.4 mol/kg is 2.9, it can be presumed that in a lithium ion conductor composed of LLZ and an electrolyte solution containing sulfolane with a salt concentration of 1.4 mol/kg or more, the ratio of atomic percentages F/S in the coating chemically bound to the surface of the LLZ is 2.9 or greater.

The present invention has been described based on embodiments hereinabove. The present invention, however, is never limited to the above embodiments, and it can be easily inferred that various modifications and variations are possible within the spirit of the present invention.

In the embodiments, power storage devices 11 including a positive electrode layer 12 having a composite layer 14 on one side of a current-collecting layer 13 and a negative electrode layer 16 having a composite layer 18 on one side of a current-collecting layer 17 were described. This, however, is not necessarily the only possible configuration. For example, it is naturally possible to apply the individual features in the embodiments to a power storage device that includes an electrode layer having the composite layer 14 and the composite layer 18 on both sides of the current-collecting layer 13 (a so-called bipolar electrode). Stacking the bipolar electrode and the electrolyte layer 15 alternately and housing the stack in a case (not illustrated) would give a so-called bipolar-structured power storage device.

In the first embodiment, a case in which the composite layers 14 and 18 and the electrolyte layer 15 all contain the lithium ion conductor 10 was described. This, however, is not necessarily the only possible configuration. The power storage device only needs to contain the lithium ion conductor 10 in at least one of the composite layer 14 or 18 or the electrolyte layer 15.

In the second embodiment, a case in which the composite layers 14 and 18 both contain the lithium ion conductor 10 was described. This, however, is not necessarily the only possible configuration. The power storage device 22 only needs to contain the lithium ion conductor 10 in at least one of the composite layer 14 or 18.

In the third embodiment, a case in which a protective layer 27 is present between an active material layer 29 and a separator 23 and in which a protective layer 30 is present between a current-collecting layer 17 and the active material layer 29 was described. This, however, is not necessarily the only possible configuration. It is naturally possible to exclude either of the protective layer 27 or 30.

In the embodiments, the lithium ion conductor 10 was described by presenting power storage devices 11, 22, and 24 that are lithium ion batteries by way of example. This, however, is not necessarily the only possible configuration. Examples of other power storage devices in which the lithium ion conductor 10 is contained include lithium ion capacitors, lithium sulfur batteries, lithium oxygen batteries, lithium oxygen batteries, and lithium air batteries.

DESCRIPTION OF REFERENCE NUMERALS

10 lithium ion conductor
11, 22, 24 power storage device
12, 25 positive electrode layer
13 current-collecting layer
14, 18 composite layer (sheet)
15 electrolyte layer (separator, sheet)
16, 28 negative electrode layer
17 current-collecting layer
19 solid electrolyte
23 separator
27,30 protective layer

**Claims**

1. A lithium ion conductor comprising a solid electrolyte containing Li, La, Zr, and O and having a garnet-type or garnet-like crystal structure and an electrolyte solution in which a lithium salt is dissolved in at least one organic solvent, wherein:

   the organic solvent includes sulfolane or a sulfolane derivative;
   in the electrolyte solution, a molality of the lithium salt is 1.4 mol/kg or more; and
   a percentage of a volume of the solid electrolyte to a total of the volume of the solid electrolyte and a volume of the electrolyte solution is 52% or more and less than 100%.

2. The lithium ion conductor according to Claim 1, wherein:

   the electrolyte solution contains F;
   the lithium ion conductor includes a coating chemically bound to a surface of the solid electrolyte; and
   elements constituting the coating include S and F, with a relative concentration ratio of F to S being 2.9 or greater.

3. The lithium ion conductor according to Claim 1 or 2, wherein the lithium salt is lithium bis(fluorosulfonyl)imide.

4. The lithium ion conductor according to Claim 1 or 2, wherein the molality of the electrolyte solution is 1.6 mol/kg or more, and the percentage is 610 or more and less than 100%.

5. The lithium ion conductor according to Claim 1 or 2, wherein the solid electrolyte further contains Mg and Sr.

6. A sheet comprising a binder and the lithium ion conductor according to Claim 1 or 2.

7. A power storage device comprising a positive electrode layer, a negative electrode layer, and a separator that separates the positive electrode layer and the negative electrode layer, wherein:
   the power storage device contains the lithium ion conductor according to Claim 1 or 2.

8. The power storage device according to Claim 7, wherein at least one of the positive electrode layer, the negative electrode layer, or the separator contains the lithium ion conductor.

9. The power storage device according to Claim 7, wherein:

   at least one of the positive electrode layer or the negative electrode layer includes a current-collecting layer;
   the power storage device includes at least one protective layer that is in contact with at least one of the separator or the current-collecting layer; and
   the protective layer contains the lithium ion conductor.

EP 4 475 141 A1

Fig.1

15

Fig. 2

Fig. 3

Fig. 4

Fig. 5

Fig. 6

## INTERNATIONAL SEARCH REPORT

International application No.

**PCT/JP2023/003062**

### A. CLASSIFICATION OF SUBJECT MATTER

**H01B 1/08**(2006.01)i; **H01B 1/06**(2006.01)i; **H01G 11/54**(2013.01)i; **H01G 11/56**(2013.01)i; **H01G 11/60**(2013.01)i; **H01G 11/62**(2013.01)i; **H01M 10/056**(2010.01)i

FI: H01B1/08; H01M10/056; H01B1/06 A; H01G11/54; H01G11/60; H01G11/62; H01G11/56

According to International Patent Classification (IPC) or to both national classification and IPC

### B. FIELDS SEARCHED

Minimum documentation searched (classification system followed by classification symbols)

H01B1/08; H01B1/06; H01G11/54; H01G11/56; H01G11/60; H01G11/62; H01M10/056

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2019/022095 A1 (TOKYO METROPOLITAN UNIV.) 31 January 2019 (2019-01-31) paragraphs [0013], [0024]-[0034] | 1-4, 6-8 |
| Y | | 5, 9 |
| Y | JP 2021-147244 A (NATIONAL UNIV. CORP. SHIZUOKA UNIV.) 27 September 2021 (2021-09-27) paragraph [0025] | 5 |
| Y | JP 2018-193479 A (TOYOTA INDUSTRIES CORP.) 06 December 2018 (2018-12-06) paragraphs [0003]-[0006], [0035] | 9 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 April 2023** | **18 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/003062**

| Patent document cited in search report | | | Publication date (day/month/year) | Patent family member(s) | Publication date (day/month/year) |
|---|---|---|---|---|---|
| WO | 2019/022095 | A1 | 31 January 2019 | US 2021/0151788 A1 paragraphs [0089]-[0094], [0146]-[0192] | |
| JP | 2021-147244 | A | 27 September 2021 | (Family: none) | |
| JP | 2018-193479 | A | 06 December 2018 | (Family: none) | |

## REFERENCES CITED IN THE DESCRIPTION

**Patent documents cited in the description**

- JP 2018045965 A